# EUROPEAN PATENT APPLICATION

(11) **EP 2 556 919 A1**
(43) Date of publication of application: **13.02.2013**
(21) Application number: 11765112.5
(22) Date of filing: 23.02.2011
(51) Int. Cl.: B23Q 11/08, B41F 33/00

(54) **MOVABLE SAFETY SCREEN DEVICE APPLICABLE TO A PRINTER, AND A PRINTER WITH SUCH A MOVABLE SAFETY SCREEN DEVICE**

(30) Priority: 09.04.2010 ES 201000479
(71) Applicant: Comexi Group Industries, S.A.U, 17457 Riudellots de la Selva (Girona) (ES)
(72) Inventor: MONER VILANOVA, Pere, 17457 Riudellots de la Selva (Girona) (ES); FORTIÀ SOLÉ, Carles, 17457 Riudellots de la Selva (Girona) (ES); PUIG VILÁ, Jordi, 17457 Riudellots de la Selva (Girona) (ES)
(74) Representative: Juncosa Miro, Jaime
(86) International application number: PCT/ES2011/000041
(87) International publication number: WO 2011/124729

(57) **Abstract**

The device comprises at least one safety screen (3) linked to a fixed structure (10) of a printer (40) through first guide elements (2a, 2b, 2c, 2d) installed in said fixed structure (10) and complementary second guide elements (3a, 3b) installed in the screen (3) for allowing a linear movement of the screen (3) between a safe position, wherein the screen (3) prevents the access to a hazardous area of the printer (40), and a withdrawn position, wherein the screen (3) is withdrawn from said hazardous area, and an electronic safety device (4a, 4b) in connection with an electronic safety module configured for deactivating or stopping the movement of any element of the printer (40) in the hazardous area if the screen (3) is not in said safe position.

## Description

### Field of the Art

The present invention generally relates to a movable safety screen device for preventing any type of risk for operators when handling a printer and more particularly for preventing risks for operators when handling hazardous areas of a printing unit of the printer when it is in operation. The present invention also relates to a printer with such movable safety screen device.

### Background of the Invention

Flexographic printers equipped with one or more safety screen devices are known. The main function of these safety screen devices is to prevent the operator or the person handling the machine from being able to access the hazardous areas when the machine is in operation or when parts of the machine are performing a certain type of movement, thus assuring that the operator is risk-free. The hazard in said hazardous areas is usually caused by the automatic movements of some elements of the machine in any of the operating modes thereof.

It is common to have different types of safety screen devices in a printer and more specifically in a printing unit of the printer. One such screen is a fixed screen device which includes, for example, a plurality of safety screens fixed or anchored to a static structure of the machine and more specifically to a structure of a printing unit. A safety screen device is called a "fixed" screen device when a tool is required to be able to remove it. Another type of safety screen device can be a movable screen device which does not require any tool for being removed since it can be moved manually by an operator.

The movable safety screen devices are normally provided with an electronic safety element connected to an electronic safety module of the machine. Therefore, when the movable screen of the safety device is removed by an operator, the electronic safety element is disconnected and this means that the electronic safety module of the machine deactivates or stops all the movements of any element which may cause any risk particularly in the area where the movable screen of the safety device has been withdrawn.

Movable safety screen devices installed in the printing units of the printer where the movable screens are assembled such that they must pivot or swivel about a horizontal axis to be moved between a safe position and a withdrawn position are known. The movement can be performed manually by an operator and once the screen is in the withdrawn position it stays in a position where the operator can access any of the different parts of the printing group quite easily.

One drawback associated with the safety screen devices installed in a printer and more specifically in a printing unit of the printer which pivot or swivel about a horizontal axis is that even though the safety screen is moved to the withdrawn position by means of said pivoting with respect to a horizontal axis, the area that can be accessed by the operator is partially blocked by the safety screen itself due to the fact that the screen is not fully withdrawn from the desired area. This is because when the screen is in the withdrawn position the horizontal axis about which the screen pivots or swivels remains in the same position as when the screen is in the safe position.

### Disclosure of the invention

The present invention aims in overcoming the preceding and other drawbacks by providing a movable safety screen device applicable to a printer and more specifically to the printing unit thereof. One or more safety screen devices comprising one or more screens designed and assembled such that they can be withdrawn leaving an area completely free for accessing different parts of the printing unit can be installed in a printer. Said one or several movable safety screens provide the printing unit with the suitable safety elements to prevent any risk for the operators.

The screens can be similar to one another in shapes and sizes although they do not necessarily have to be identical. All the screens are formed by a flat body which can be made from a transparent material or can have dies, windows or openings to allow seeing through same while at the same time preventing the passage of any member of the human body. The screens are generally rectangular and comprise a certain type of rail for a lineal guide system. The rails can be individual parts installed in the body of the screen or can be formed integrally with the body of the screen. Another part of the lineal guide system comprises wheels, guide bearings, or similar elements which are fixed in a static part of the machine, such as a structure thereof. In one embodiment, the wheels, guide bearings, or similar elements are fixed, for example, at the front of a base of the printing unit of the printer.

The rails of the screen are parallel to and are separated from one another and the wheels, guide bearings, or similar elements are coupled to the rails such that the screen is supported in a movable projecting manner by the wheels, guide bearings, or similar elements. Therefore, by means of its rails the screen can be moved by the sliding or rolling existing between the rails and the wheels or guide bearings fixed in the structure of the machine between a safe position in which the screen prevents the access to a hazardous area of the printer and a withdrawn position in which the screen is withdrawn from said hazardous area.

This horizontal movement of the screen allows clearing the space which it occupied in the safe position completely when the screen is in the withdrawn position, the operator being able to access the different areas of the printing unit perfectly. In one embodiment, the flat body of the screen is assembled in a vertical plane and the rails are arranged horizontally one in its upper part and another in its lower part. In one embodiment, the screen comprises an auxiliary screen element connected to same by one or more hinges allowing said auxiliary screen element to pivot with respect to the screen about a horizontal axis when the screen is in the safe position. Therefore, in the safe position for example, the screen can have a main section arranged in the vertical plane and another auxiliary section arranged in a horizontal plane.

The movable safety screen device further comprises an electronic safety device in connection with an electronic safety module of the printer configured for deactivating or stopping the movement of any element of the printer in the hazardous area if the screen is not in said safe position.

When the screens are in the safe position, a safety element fixed to the screen is arranged in a position suitable for cooperating with another safety element fixed to the structure of the machine such that the electronic safety module detects the coupling of the two safety elements and allows normal printer operation. When one of the screens moves to the withdrawn position, the safety element fixed to the screen is disconnected from the other safety element fixed to the structure of the machine and the electronic safety module deactivates or stops any movement of any element of the printing group involved in order to prevent any risk for the operator who can safely access the area from where the screen has been removed.

When the screen is closed in the safe position, it is supported in cantilever at one of its ends by the guide elements fixed to the screen and to the structure. At the other end of the screen opposite the end on which it is supported, there is a support and positioning element such as a conical element positioned for cooperating with another support and positioning element fixed to the structure when the screen reaches the safe position. The screen has a securing member fixed at the same end thereof having the support and positioning element. This securing member is positioned for cooperating with another securing member fixed to the structure when the screen reaches the safe position. In one embodiment, these two securing members comprising at least one magnetic element and are selected for exerting a strong enough securing force for securing the screen in the safe position and at the same time allowing the screen to be moved to the withdrawn position by a small thrusting force exerted manually thereon.

### Brief Description of the Drawings

The foregoing and other features and advantages will be more obvious from the following detailed description of embodiments in reference to the attached drawings, in which:
Figure 1 is a side view of a structure of a printer with a plurality of safety screen devices according to an embodiment of the present invention with an enlarged detail;
Figure 2 is a perspective view of one of the movable safety screen devices showing an inner side thereof;
Figure 3 is a perspective view of the movable safety screen device of Figure 2 showing an outer opposite side thereof;
Figure 4 is a perspective view similar to Figure 3 but with a partially sectioned screen body to better show other elements of the device; and
Figure 5 is an elevational side view of the movable safety screen device.

### Detailed Description of the Embodiments

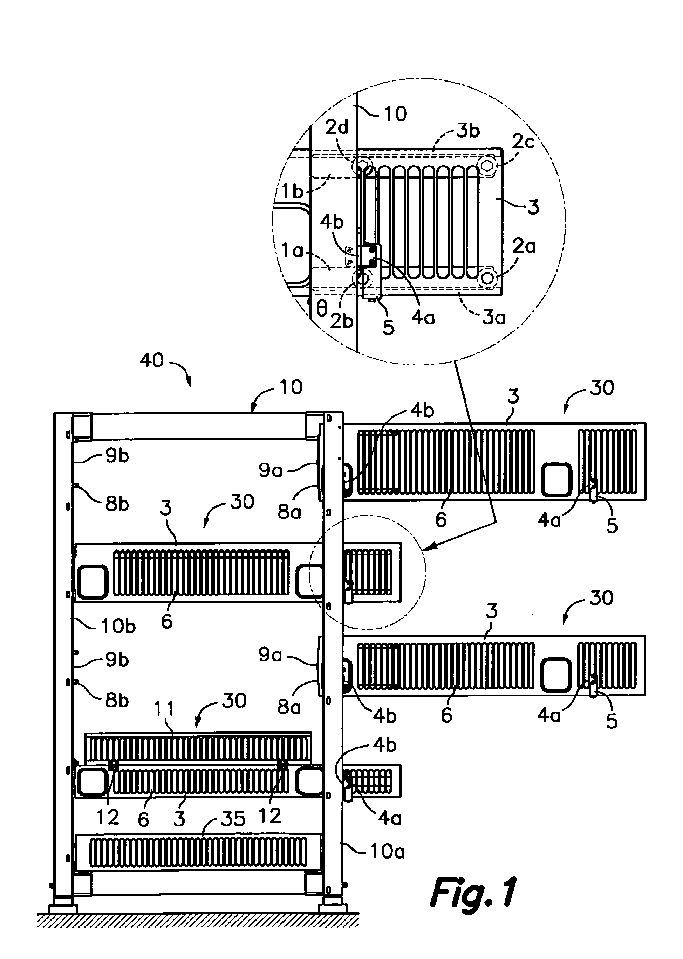

First referring to Figure 1, it shows a structure 10 of a printer 40 comprising a plurality of printing groups (not shown), each of which in turn comprises one or more rollers (not shown) parallel to a printing roller (not shown). The drawing plane in Figure 1 is a vertical plane parallel to the axis of the printing roller. The printing groups are arranged at different heights and comprise movable elements forming hazardous areas when the printer 40 is in operation. Each of the printing groups has associated therewith a movable safety screen device 30 according to the present invention. A fixed screen 35 is installed in the lower part of the structure.

Each of the movable safety screen devices 30 comprises a screen 3 linked to a first rack 10a of the fixed structure 10 of the printer 40 by linking means comprising first guide elements installed in said first rack 10a of the structure 10 and complementary second guide elements installed in the screen 3 for allowing a linear movement of the screen 3 between a safe position, in which the screen 3 prevents the access to a hazardous area of the printer 40, and a withdrawn position, in which the screen 3 is withdrawn from said hazardous area.

In the embodiment shown, the mentioned first and second guide elements are arranged for allowing the mentioned linear movement of the screens 3 in a horizontal direction parallel to the printing roller of the printer 40 and each screen 3 has a flat screen body located in a vertical plane. Figure 1 shows four movable screens 3 located respectively from top to bottom in the safe position, the withdrawn position, the safe position, and the withdrawn position.

Each movable safety screen device 30 further comprises an electronic safety device 4a, 4b in connection with an electronic safe module (not shown) of the printer 40 configured for deactivating or stopping the movement of any element of the printer 40 in the hazardous area if the screen 3 is not in said safe position as will be described in greater detail below.

As can be seen in the embodiment shown in Figure 1, the screens 3 generally have an elongated rectangular configuration although they do not necessarily have the same geometry. Each screen 3 comprises a flat stiff body made for example from sheet metal with big enough openings 6 to allow seeing through same but small enough to prevent the passage of any member of the human body through same. It will be understood that the screens 3 can alternatively comprise a flat stiff transparent body made for example from plastic to allow seeing through same and prevent the passage of any member of the human body through same, or they can be made from sheet metal or opaque plastic with one or more large windows closed by a transparent plastic material.

In the printer 40 of Figure 1, the movable screen 3 located at the lowest level includes an auxiliary screen element 11 which is connected to the screen 3 by one or more hinges 12 allowing said auxiliary screen element 11 to pivot with respect to the screen 3 about a horizontal axis when the screen 3 is in the safe position. Alternatively or additionally, the auxiliary screen element 11 can be connected to the screen 3 by sliding means allowing the auxiliary screen element 11 to slide with respect to the screen 3 in a direction perpendicular to a horizontal axis when the screen 3 is in the safe position. This auxiliary screen element 11 allows better protecting some elements in a particular printing group.

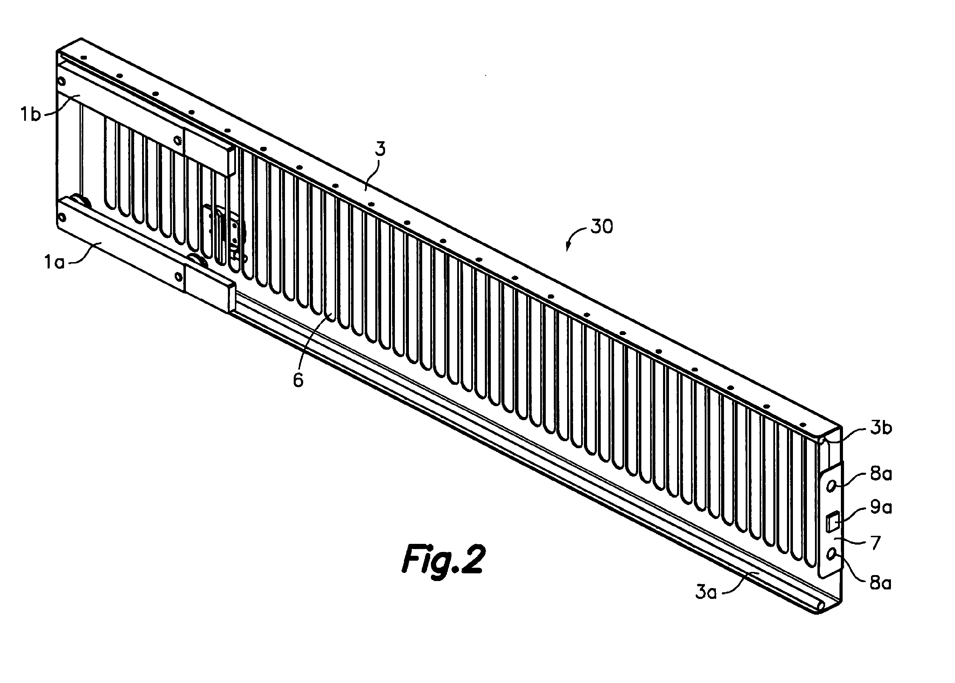

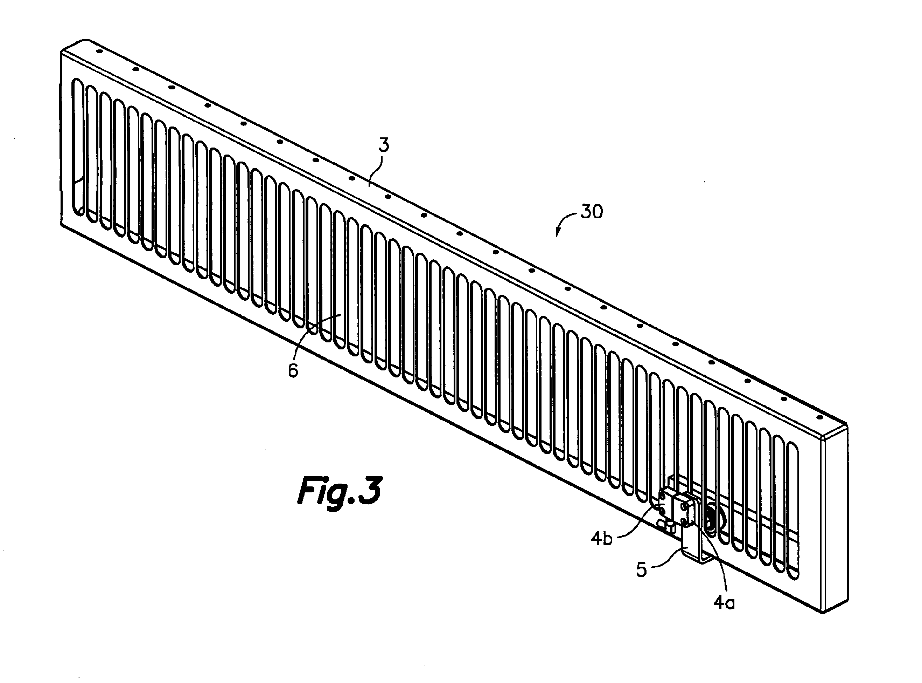

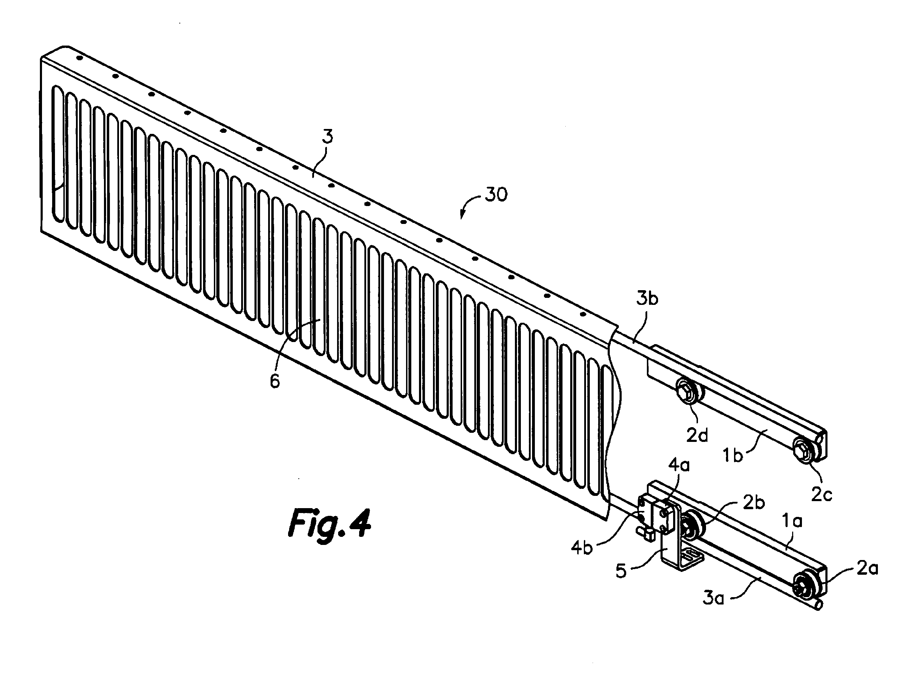

As better shown in Figures 2 to 5, the mentioned first guide elements comprise two first bearings 2a, 2b installed on a first support 1 a fixed to the first rack 10a of the structure 10 (which has been omitted in Figures 2 to 5 for the sake of clarity) and two second bearings 2c, 2d installed on a second support 1b also fixed to the first rack 10a of the structure 10. The two first bearings 2a, 2b are separated from one another by a predetermined distance and aligned according to a first horizontal direction, and the two second bearings 2c, 2d are separated from one another by a predetermined distance and aligned according to a second horizontal direction parallel to said first horizontal direction and separated from same.

The mentioned second guide elements comprising first and second rails 3a, 3b fixed to the body of the screen 3. The mentioned first and second rails 3a, 3b are parallel and are separated from one another by a distance according to the separation between the first and second bearings 2a, 2b, 2c, 2d. The first rail 3a is coupled to the two first bearings 2a, 2b and the second rail 3b is coupled to said two second bearings 2c, 2d. The distance of separation between both the first bearings 2a, 2b and between both the second bearings 2c, 2d is significantly shorter than the length of the rails 3a, 3b and of the screen 3 such that the screen 3 is supported in a movable projecting manner by the first and second bearings 2a, 2b, 2c, 2d coupled to the first and second rails 3a, 3b.

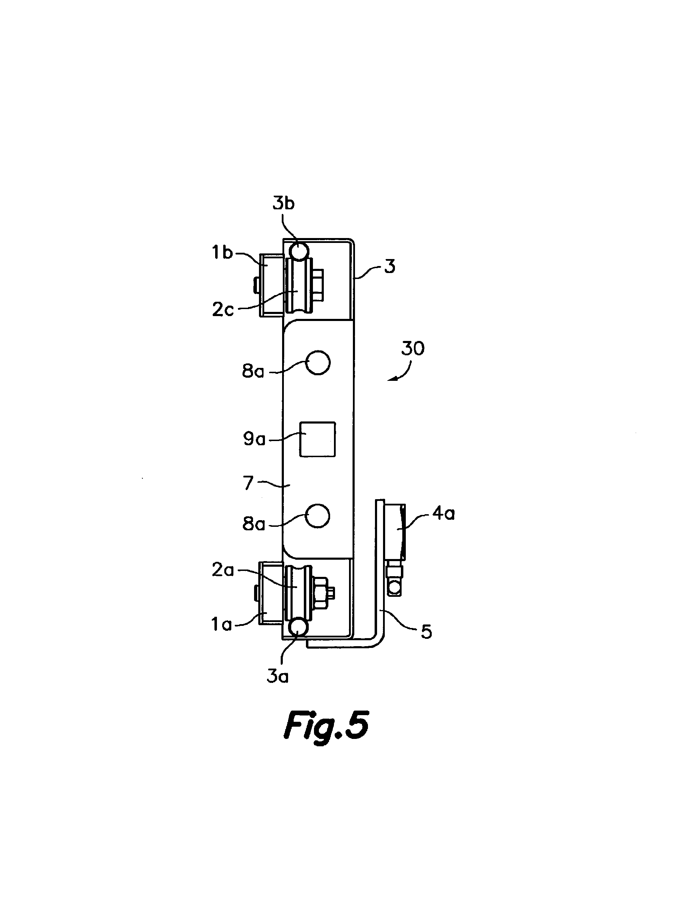

In the illustrated embodiment and as better shown in Figure 5, the first and second bearings 2a, 2b, 2c, 2d have a circumferential groove and the first and second rails 3a, 3b are formed by rods with circular cross-section fixed, for example by welding, to the body of the screen 3. Alternatively, the first and second rails 3a, 3b could be formed integrally in the body of the screen 3, for example by folding or press forming, when the body of the screen 3 is made of sheet metal, or by moulding, when the body of the screen is made of a plastic material. Alternatively, the first and second bearings 2a, 2b, 2c, 2d could also be replaced by corresponding wheels or other sliding or rolling elements coupled to the first and second rails 3a, 3b.

As seen in enlarged detail in Figure 1, the mentioned first and second supports 1 a, 1 b are fixed to the first rack 10a of the structure 10 such that they protrude outwards from an access area for accessing said hazardous area of the printer 40. Therefore, the screens 3 which are longer than the access area also protrude outwards partially from the first rack 10a of the structure 10 when they are in the safe position. However, when the screens 3 are in the withdrawn position they leave a completely free access area for accessing the hazardous area of the printer 40 providing an operator with easy access to the printing groups without any restriction.

In Figures 2 to 4, the first and second supports 1 a, 1 b and the first and second bearings 2a, 2b, 2c, 2d are shown in the safe position in relation with the first and second rails 3a, 3b and the body of the screen 3.

Given that in the safe position the screen 3 has most of its length supported in cantilever, each screen 3 comprises a support and positioning hole 8a formed in a front tab 7 of the body of the screen 3 (Figure 2) and a corresponding support and positioning lug 8b is fixed in a second rack 10b of the structure 10 opposite the first rack 10a (Figure 1). The mentioned support and positioning lug 8b has a frustoconical end and is sized and arranged for axially penetrating the support and positioning hole 8a when the screen 3 reaches the safe position. Optionally, there can be two or more support and positioning holes 8a in each screen 3 and two or more corresponding support and positioning lugs 8b can be fixed in the second rack 10b of the structure 10.

Therefore, the end of the screen 3 furthest from the first and second bearings 2a, 2b, 2c, 2d when the screen 3 is in the safe position is supported and centred by the support and positioning lug or lugs 8b fixed in the second rack 10b and inserted in the support and positioning hole or holes 8a. Alternatively, other pairs of support and positioning elements arranged in the screen 3 and in the second rack 10b of the structure 10, respectively, configured and arranged for coupling to and cooperating with one another when the screen 3 reaches the safe position can be used for supporting and positioning the end of the screen 3 in the safe position.

Each screen 3 further comprises a first securing member 9a positioned for cooperating with a second securing member 9b fixed to the structure 10 when the screen 3 reaches the safe position. These first and second securing members 9 are formed for exerting, when they are coupled, a strong enough securing force for securing the screen 3 in the safe position and at the same time allowing the screen 3 to be moved to the withdrawn position by a thrusting force exerted manually thereon. In the embodiment shown, the first securing member 9a comprises a magnetic element, such as a permanent magnet or the like, fixed to said front tab 7 of the body of the screen 3 (Figure 2), and the second securing member 9b is a surface of the second rack 10b of the structure 10 which is made of a ferromagnetic material. Alternatively, the first and second securing members could comprise other configurations such as elastic couplable elements, etc., for carrying out the same function. In another alternative embodiment not shown, the first securing member 9a could be configured for fitting into a section of the structure 10 or into an element fixed to the structure 10.

The mentioned front tab 7 located at the same end of the screen 3 where the support and positioning holes 8a are formed and the first securing member 9a is fixed acts as a stop 7 which is positioned for interfering with the first rack 10a of the structure 10 or with another element fixed to the structure 10 when the screen 3 reaches the withdrawn position. Therefore, the stop 7 establishes an end of run for the screen 3 in the withdrawn position and prevents the rails 3a, 3b from decoupling from the bearings 2a, 2b, 2c, 2d.

The aforementioned electronic safety device comprises a first safety element 4a fixed to the screen 3, for example by means of a support 5, and a second safety element 4b fixed to the first rack 10a of the structure 10. Said first and second safety elements 4a, 4b are arranged in respective positions selected such that the first and second safety elements 4a, 4b of the electronic safety device are coupled to one another when the screen 3 is in the safe position.

When the first and second safety elements 4a, 4b are coupled they cooperate with one another and with the electronic safety module of the printer 40 for allowing it to operate normally. When the screen moves from the safe position to the withdrawn position, the first and second safety elements 4a, 4b are decoupled and the electronic safety module of the printer 40 acts for deactivating or stopping the movement of any element in the hazardous area.

Alternatively, the second safety element 4b can be fixed to the second rack 10b of the structure 10 instead of the first rack 10a, in which case the first safety element 4a is fixed to the screen 3 in a suitable position for coupling same when the screen 3 reaches the safe position.

Modifications and variations from the embodiment shown and described will be obvious to a person skilled in the art without departing from the scope of the present invention as defined in the attached claims.

## Claims

1. A movable safety screen device applicable to a printer (40) of the type comprising at least one safety screen (3) linked to a fixed structure (10) of said printer (40) by linking means allowing said screen (3) to be moved between a safe position, wherein the screen (3) prevents the access to a hazardous area of the printer (40), and a withdrawn position, wherein the screen (3) is withdrawn from said hazardous area, and an electronic safety device in connection with an electronic safety module configured for deactivating or stopping the movement of any element of the printer (40) in the hazardous area if the screen (3) is not in said safe position, **characterised in that** said linking means comprise first guide elements installed in said fixed structure (10) and complementary second guide elements installed in the screen (3) for allowing a linear movement of the screen (3) between the safe and withdrawn positions.

2. The device according to claim 1, **characterised in that** said first and second guide elements are arranged for allowing said linear movement of the screen (3) in a horizontal direction parallel to a printing roller of the printer (40).

3. The device according to claim 2, **characterised in that** said first guide elements comprise at least one wheel or bearing (2a, 2b, 2c, 2d) and said second guide elements comprise at least one rail (3a, 3b) coupled to said wheel or bearing (2a, 2b, 2c, 2d).

4. The device according to claim 2 or 3, **characterised in that** said first guide elements comprise two first bearings (2a, 2b) separated by a predetermined distance and aligned according to a first horizontal direction and two second bearings (2c, 2d) separated by a predetermined distance and aligned according to a second horizontal direction parallel to said first horizontal direction and separated from same, and said second guide elements comprise parallel first and second rails (3a, 3b), separated and respectively coupled to said two first bearings (2a, 2b) and to said two second bearings (2c, 2d).

5. The device according to claim 4, **characterised in that** the two first bearings (2a, 2b) are installed on a first support (1a) and the two second bearings (2c, 2d) are installed on a second support (1 b), and said first and second supports (1 a, 1 b) are fixed to the structure (10) outside an access area for accessing said hazardous area of the printer (40).

6. The device according to claim 5, **characterised in that** the screen (3) comprises a first support and positioning element (8a) positioned for cooperating with a second support and positioning element (8b) fixed to the structure (10) for supporting and centring one end of the screen (3) when it reaches the safe position.

7. The device according to claim 5 or 6, **characterised in that** the screen (3) comprises a first securing member (9a) positioned for cooperating with a section of the structure (10) or with a second securing member (9b) fixed to the structure (10) when the screen (3) reaches the safe position for securing the screen (3) in the safe position.

8. The device according to claim 7, **characterised in that** said first and second securing members (9a, 9b) are selected for exerting a strong enough securing force for securing the screen (3) in the safe position and at the same time allowing the screen (3) to be moved to the withdrawn position by a thrusting force exerted manually thereon.

9. The device according to claim 7 or 8, **characterised in that** said first and second securing members (9a, 9b) comprise at least one magnetic element.

10. The device according to claim 5, **characterised in that** the screen (3) comprises a stop (7) positioned for interfering with the structure (10) or with an element fixed to the structure (10) when the screen (3) reaches the withdrawn position.

11. The device according to any one of the preceding claims, **characterised in that** said electronic safety device comprises a first safety element (4a) fixed to the screen (3) and a second safety element (4b) fixed to the structure (10) in respective selected positions so that said first and second safety elements (4a, 4b) of the electronic safety device cooperate with one another when the screen (3) is in the safe position.

12. The device according to any one of claims 1 to 11, **characterised in that** said screen (3) comprises a flat stiff body with openings (6) sized to allow seeing through same and prevent the passage of any member of the human body through same.

13. The device according to any one of claims 1 to 11, **characterised in that** said screen (3) comprises a flat stiff transparent body to allow seeing through same and prevent the passage of any member of the human body through same.

14. The device according to any one of the preceding claims, **characterised in that** the screen (3) comprises an auxiliary screen element (11) connected to same by one or more hinges (12) allowing said auxiliary screen element (11) to pivot with respect to the screen (3) about a horizontal axis and/or sliding means allowing said auxiliary screen element (11) to slide with respect to the screen (3) in a direction perpendicular to a horizontal axis when the screen (3) is in the safe position.

15. A printer (40) with a movable safety screen device according to any one of the preceding claims, **characterised in that** the printer (40) comprises a plurality of printing groups, each of which comprises one or more rollers parallel to a printing roller and at least one movable safety screen device (30) associated with each of said printing groups.
